# EUROPEAN PATENT SPECIFICATION

(11) **EP 1 591 239 B1**
(45) Date of publication and mention of the grant of the patent: **19.01.2011**
(21) Application number: 05009442.4
(22) Date of filing: 29.04.2005
(51) Int. Cl.: B32B 37/15, B32B 38/00, B29C 47/88, B29C 59/08

(54) **Method and apparatus for manufacturing film or laminated product**
Verfahren und Vorrichtung zur Herstellung eines Films oder eines Verbundprodukts
Méthode et dispositif pour la fabrication d'un film ou d'un produit laminé

(30) Priority: 30.04.2004 JP 2004135815
(43) Date of publication of application: 02.11.2005
(73) Proprietor: FUJIFILM Corporation, Minato-ku Tokyo (JP)
(72) Inventor: Katsumoto, Ryuichi, Fujinomiya-shi (JP); Tsuji, Koichi, Fujinomiya-shi (JP)
(74) Representative: Klunker . Schmitt-Nilson . Hirsch

(56) References cited:
- WO-A1-98/52750
- JP-A- 3 044 632
- JP-A- 2002 316 350

## Description

### BACKGROUND OF THE INVENTION

### 1. Field of the Invention

The present invention relates to a method and apparatus for manufacturing a film or a laminated product, and particularly relates to a method and apparatus, in which a gas blower for blowing thermally unstable gas is disposed near an extrusion die, for manufacturing a film or a laminated product.

### 2. Description of the Related Art

When manufacturing a laminated product of a support for photographic paper, the following method is widely used: a molten thermoplastic resin such as polyolefin is extruded into a film from an extrusion die, applied to a support such as paper, and nipped between a nip roller and a cooling roller. Further, a film forming method of directly extruding a molten thermoplastic resin onto a cooling roller without using any support is also widely used.

In the manufacturing of such a film and a laminated product, a gas blower disposed near an extrusion die blows kinds of gas for various purposes. For example, Japanese Patent Application Laid-open No. 63-246227 discloses that in order to reduce fine hole defects (hereinafter, referred to as "craters") on a surface of a resin film laminated on a support, gas prone to permeate through the resin film is blown to a nip point where the support and the resin film are nipped. Japanese Patent No. 2749381 corresponding to Japanese Patent Application No. 3-44632. discloses that inert gas is blown to a surface of a resin film on the side of a cooling roller to prevent an odor and ozone gas is blown to a surface of the resin film on the side of a support to increase adhesion between the support and the resin film.

However, since the molten thermoplastic resin is extruded at a high temperature from the extrusion die, a volatile component such as oligomer volatilized from the resin film of the thermoplastic resin adheres to the gas blower and accumulates as a contamination on the gas blower, and a part of the adherent falls to the cooling roller and the nip roller or the support and the product, resulting in a contamination on the rollers and the product. Particularly a volatile matter falling to a product causes low product quality as well as poor product appearance. Further, a volatile component may directly adhere to the cooling roller and the nip roller and contaminate the rollers. In this case, it is necessary to temporarily stop the production line to perform cleaning, resulting in considerably low productivity.

The applicant proposed in Japanese Patent Application Laid-open No. 2002-316350 that a gas blower is covered with a heater and the gas blower is heated to the volatilization temperature of a volatile component to prevent the volatile component from adhering to the gas blower.

### SUMMARY OF THE INVENTION

However, in the case of thermally unstable gas such as ozone gas which is prone to decomposition, when the gas blower is heated by the heater, the gas is decomposed by the heat of the heater. Thus, it is not possible to sufficiently obtain a gas blowing effect.

As a method for preventing a volatile component from adhering to a gas blower without heating the gas blower, a method of blowing gas containing no volatile component such as oligomer to a gas blower is available. However, it is necessary to provide another blower for gas containing no volatile component or provide a plurality of nozzle outlets to integrate the blower with a gas blower for ozone gas, so that the nozzle increases in cross-sectional area and the cost of equipment also increases. As a method for preventing a volatile component such as oligomer from falling to a support or the like, a method of preventing oligomer from falling with an oligomer adsorption tape is available. However, a problem of long-time stability arises. In this way, no decisive solution has been found in the conventional art.

The present invention is devised in view of these circumstances. It is an object of the present invention to provide a method according to claim 1 and apparatus according to claim 3 for manufacturing a film or a laminated product whereby the adherence of a volatile component does not contaminate a gas blower, rollers, a support, a product, and so on and a gas blowing effect can be positively obtained even when thermally unstable gas is blown from the gas blower.

In order to attain the object, a first aspect of the present invention is a method for manufacturing a film or a laminated product, in which when a film made of a resin or the laminated product having a resin film laminated on a support is manufactured, a molten thermoplastic resin is extruded into a film from an extrusion die and thermally unstable gas is blown from a gas blower disposed near the extrusion die, characterized in that the gas blower is forcibly cooled while the gas blower is covered with a cover and only the cover is heated to the volatilization temperature or higher of a volatile component volatilized from the extruded thermoplastic resin.

According to the first aspect, the gas blower is forcibly cooled while the gas blower is covered with the cover and only the cover is heated to the volatilization temperature of a volatile component volatilized from the extruded thermoplastic resin. Thus, it is possible to prevent the volatile component from adhering to and accumulating on the gas blower while keeping gas blown from the gas blower at a low temperature. Hence, even when thermally unstable gas is blown from the gas blower, it is possible to prevent the adherence of the volatile component from contaminating the gas blower, rollers, a support, a product, and so on and positively obtain a gas blowing effect.

According to the first aspect, a second aspect of the present invention is characterized in that the thermally unstable gas is ozone gas. The ozone gas is important gas which increases adhesion between the support and the resin film and improves product quality. However, the ozone gas is too thermally unstable to sufficiently obtain a blowing effect.

In order to attain the object, a third aspect of the present invention is an apparatus for manufacturing a film or a laminated product, in which when a film made of a resin or a laminated product having a resin film laminated on a support is manufactured, a molten thermoplastic resin is extruded into a film from an extrusion die and gas is blown from a gas blower disposed near the extrusion die, the apparatus comprising: a cover for covering the gas blower via a space, a heating device which heats the cover, and a cooling device which cools the gas blower.

The third aspect is an apparatus configuration for implementing the method of manufacturing the film or the laminated product of the first aspect. The gas blower is cooled by the cooling device while the cover is heated by the heating device. Thus, it is possible to prevent a volatile component from adhering to the gas blower while preventing the blown gas from increasing in temperature. In this case, the space is formed between the cover and the gas blower and thus heat on the cover is less likely to be transferred to the gas blower, so that the gas blower can be efficiently cooled and the blown gas can be kept at a low temperature.

According to the third aspect, a fourth aspect of the present invention is characterized in that the space between the gas blower and the cover is filled with a heat insulator.

According to the fourth aspect, the space between the gas blower and the cover is filled with a heat insulator and thus gas blown from the gas blower can be kept at a lower temperature.

As described above, according to the method and apparatus for manufacturing a film or a laminated product of the present invention, even when thermally unstable gas is blown from the gas blower, it is possible to prevent the adherence of the volatile component from contaminating the gas blower, the rollers, the support, the product, and so on, and positively obtain the gas blowing effect.

### BRIEF DESCRIPTION OF THE DRAWINGS

Fig. 1 is a structural diagram schematically showing the overall configuration of an apparatus for manufacturing a laminated product;
Fig. 2 is a perspective view showing the overall configuration of the apparatus for manufacturing the laminated product;
Fig. 3 is a sectional view showing a preferred example of a gas blower with a cover in the apparatus for manufacturing the laminated product of the present invention;
Fig. 4 is a sectional view showing a gas blower used in Test 1; and
Fig. 5 is a sectional view showing a gas blower used in Test 2.

### DETAILED DESCRIPTION OF THE PREFERRED EMBODIMENTS

The following will specifically describe a preferred embodiment of a method and apparatus for manufacturing a film or a laminated product of the present invention in accordance with the accompanying drawings.

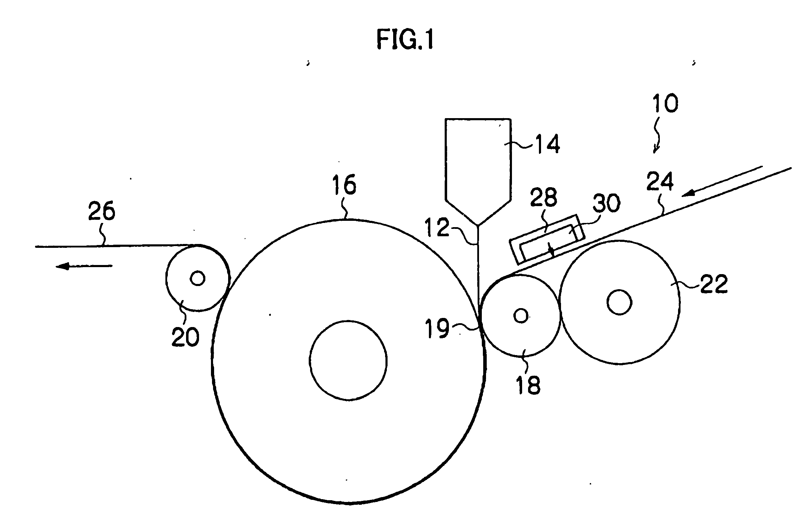

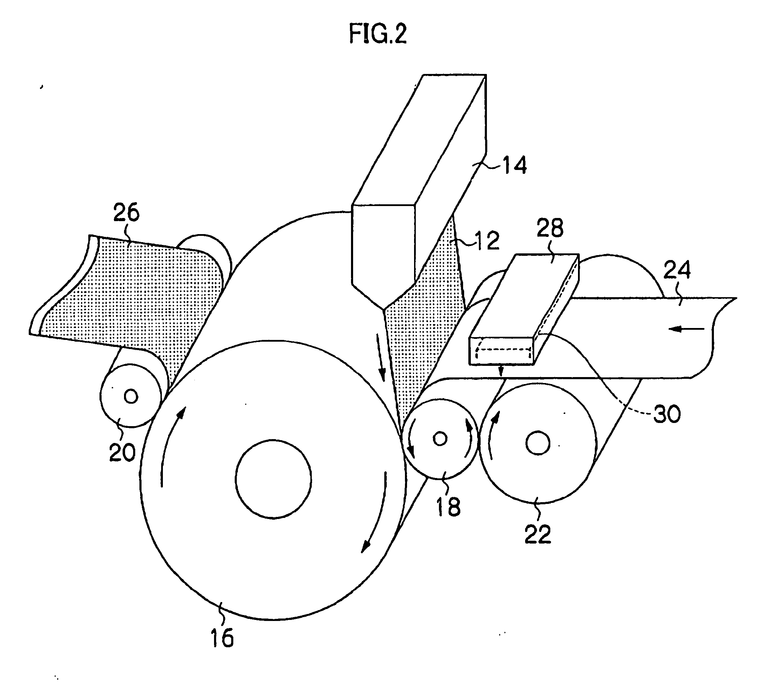

Fig. 1 is a structural diagram which schematically shows the overall configuration of a manufacturing apparatus 10 for a laminated product as an example of the present invention. Fig. 2 is a perspective view. The embodiment of the present invention will be described by way of an example in which ozone gas is used as thermally unstable gas blown from a gas blower and the ozone gas improves adhesion between a support and a resin film. The thermally unstable gas is not limited to ozone gas but includes gases used in the manufacturing of a resin film or a laminated product having a resin film laminated on a support, and thus all thermally unstable gases are included.

As shown in Figs. 1 and 2, a cooling roller 16 and a nip roller 18 are adjacent to and parallel with each other below an extrusion die 14 from which a resin film 12 of a molten thermoplastic resin is extruded. On the opposite side of the cooling roller 16 from the nip roller 18, a peeling roller 20 is adjacent to and parallel with the cooling roller 16. Further, a backup roller 22 is disposed on the opposite side of the nip roller 18 from the cooling roller 16. On a nip point 19 where the cooling roller 16 and the nip roller 18 make contact with a support 24 shaped like a moving belt, the resin film 12 extruded from the extrusion die 14 is nipped while applied as a coating on the support 24. The support 24 coated with the resin film 12 travels with a resin film side making contact with the surface of the cooling roller 16, so that the support 24 is cooled. Then, the support 24 is peeled off from the cooling roller 16 by the peeling roller 20. Thus, a laminated product 26 is manufactured which has the resin film 12 laminated on the support 24 (backing).

A gas blower 30 covered with a cover 28 is disposed near the extrusion die 14 and above the traveling support 24, and ozone gas is blown to the support 24 from the gas blower 30. The blown ozone gas is accompanied with entrained air resulted from the traveling of the support 24, flows to the region of the nip point 19, and makes contact with the molten resin film 12. Hence, a surface of the resin film 12 is oxidized and activated, thereby improving adhesion between the support 24 and the resin film 12 which are nipped by the cooling roller 16 and the nip roller 18.

In the present embodiment, the ozone gas blown from the gas blower 30 is blown to the support 24 and brought into contact with the support 24 by using entrained air. Ozone gas may be directly blown to the resin film 12 extruded from the extrusion die 14. In this case, the gas blower 30 is disposed on the right of the resin film 12 in Fig. 1 and ozone gas is blown to a resin film surface bonded to the support 24.

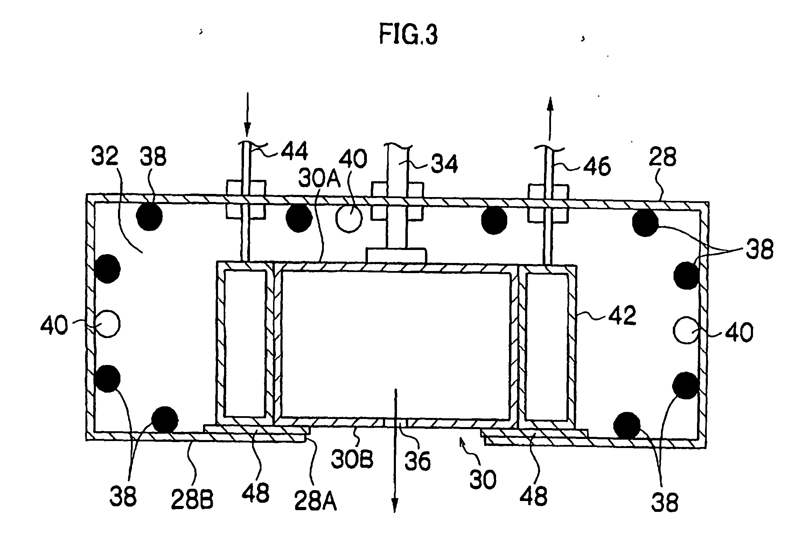

Fig. 3 is a sectional view showing the gas blower 30 having the cover 28. The gas blower 30 is formed into a rectangular parallelepiped having a cavity. The cover 28 for covering the gas blower 30 is provided outside the gas blower 30, and a space 32 is formed between the gas blower 30 and the cover 28. A gas supply tube 34 for supplying ozone gas into the gas blower 30 is connected to a top surface 30A of the gas blower 30 through the cover 28, and a nozzle outlet 36 shaped like a long slit is formed on the underside (hereinafter, referred to as a "blowing surface 30B") of the gas blower 30 along the width direction of the support 24. Thus, ozone gas supplied from the gas supply tube 34 into the gas blower 30 is compressed in the gas blower 30 and blown from the nozzle outlet 36.

The cover 28 for covering the gas blower 30 is formed into a box having a lower end opening 28A not blocking the nozzle outlet 36 of the gas blower 30. On the inner surface of the cover 28, a plurality of heaters 38 for heating the cover 28 are so disposed as to make contact with the inner surface of the cover 28. The heaters 38 are electrically connected to a power supply (not shown). In the cover 28, a plurality of temperature sensors 40 of thermocouples are provided to detect temperatures on a plurality of points of the cover 28 heated by the heaters 38. Detection signals are transmitted from the sensors to the power supply. According to the detection signals of temperatures measured by the temperature sensors 40 in the cover, the power supply performs control such that the temperatures in the cover are higher than the volatilization temperature of a volatile component which is volatilized from the molten resin film 12 extruded from the extrusion die 14. Hence, even when the volatile component (e.g., an oligomer or the like) of the resin film 12 adheres to the cover 28, the cover 28 is heated to the volatilization temperature of the volatile component or higher and thus the volatile component instantly volatilizes from the cover 28. Therefore, since the volatile component does not adhere to or accumulate on the cover 28, the volatile component does not adhere to or accumulate on the gas blower 30 stored in the cover 28. Although the heaters 38 and the temperature sensors 40 can be disposed outside the cover 28, ozone gas blown from the gas blower 30 may oxidize and corrode the heaters 38 and the temperature sensors 40. Therefore, it is preferable to dispose the heaters 38 and the temperature sensors 40 inside the cover 28 in consideration of the lives of the heaters 38 and the temperature sensors 40. The heaters 38 are not limited to electric heaters. For example, a steam supply pipe may be provided in the cover 28 and the cover 28 may be heated by injecting steam into the pipe. In short, any configuration can be used as long as only the cover 28 is heated.

The sides of the gas blower 30 are surrounded by cooling pipes 42 which is quadrilateral in cross section. A refrigerant supply pipe 44 for supplying air or water and a refrigerant discharge pipe 46 are connected to the cooling pipe 42. With this configuration, the gas blower 30 is forcibly cooled and thus ozone gas blown from the gas blower 30 can be kept at a low temperature even when the cover 28 is heated. In the above description, the sides of the gas blower 30 are surrounded by the cooling pipe 42. The cooling pipe 42 may be provided also on the top surface of the gas blower 30.

The bottom of the cooling pipe 42 and the corn*ers of the bottom of the gas blower 30 are supported by a base plate 28B of the cover 28 via heat insulation sheets 48. Thus, it is possible to suppress the transmission of heat from the heaters 38 and heat from the cover 28 heated by the heaters 38 to the gas blower 30 and the cooling pipe 42 and prevent a temperature increase in the gas blower 30, so that ozone gas blown from the gas blower 30 can be easily kept at a low temperature. In this case, when the space 32 is filled with a heat insulator such as glass wool and foamed ceramics (not shown), ozone gas blown from the gas blower 30 can be more easily kept at a low temperature. For an heat insulator such as glass wool which may thermally degrade and fall to the support 24 and so on, it is necessary to perform sealing or the like to prevent the heat insulator from falling to the support 24.

When a laminated product 26 is manufactured using the manufacturing apparatus 10 configured thus, the surface of the traveling support 24 is coated with the resin film 12 of the molten thermoplastic resin extruded from the extrusion die 14, the support 24 and the resin film 12 are nipped by the nip roller 18 and the cooling roller 16, ozone gas is blown from the gas blower 30 to the support 24, and air is substituted by the ozone gas in the region of the nip point 19 where the resin film 12 and the support 24 are nipped. Thus, the surface of the resin film 12 is oxidized and activated and the laminated product 26 having high adhesion between the support 24 and the resin film 12 is manufactured.

In the manufacturing of the laminated product 26, the volatilization temperature of the volatile component of the thermoplastic resin extruded from the extrusion die 14 is determined beforehand, and the thermoplastic resin is extruded from the extrusion die 14 after the cover 28 for covering the gas blower 30 is heated to the determined volatilization temperature or higher. Further, air or water is injected into the cooling pipe 42 around the gas blower 30 to forcibly cool the gas blower 30. The volatilization temperature of the volatile component of the thermoplastic resin may be actually measured by a measuring instrument (not shown) or may be looked up from a chemical handbook based on a component contained in the thermoplastic resin. The concentration of ozone gas in the nozzle outlet 36 of the gas blower 30 has to be high enough to obtain the adhesion effect between the support 24 and the resin film 12. Ozone gas is easily decomposed by heat and the decomposition speed increases exponentially with temperature. Therefore, it is preferable that a temperature to which the gas blower 30 should be forcibly cooled be set as follows: since the residence time of ozone gas in the gas blower 30 and the amount of ozone decomposed at an ambient temperature in the gas blower 30 are determined by calculation, the concentration of ozone gas blown from the gas blower 30 is set high enough to obtain the adhesion effect between the support 24 and the resin film 12 in consideration of the amount of decomposition.

In this way, in the present invention, the gas blower 30 is covered with the cover 28 and the cover 28 is heated to the volatilization temperature or higher of the volatile component volatilized from the extruded thermoplastic resin, whereas the gas blower 30 is forcibly cooled. Thus, even when thermally unstable gas is blown from the gas blower 30, the adhesion of the volatile component does not contaminate the gas blower 30, the rollers 16, 18, 20 and 22, a carrying roller (not shown), the support 24, the laminated product 26, and so on. In addition, it is possible to positively achieve the adhesion effect with a flow of gas between the support 24 and the resin film 12. In this case, the flow velocity of gas blown from the gas blower 30 is affected by an attraction force which attracts the volatile component to the gas blower 30. Thus, it is preferable that the flow velocity of ozone gas blown from the nozzle outlet 36 be equal to or lower than 50 m/second. Hence, it is possible to reduce a negative pressure caused by gas blown from the nozzle outlet 36 and prevent the volatile component from the resin film 12 from being attracted to the gas blower 30. The flow velocity of gas can be effectively reduced by increasing the clearance of the nozzle outlet 36 or reducing the flow rate of gas supplied to the gas blower 30.

The technical idea of the present invention is not limited to the manufacturing of the laminated product 26 using the extrusion die 14. The technical idea is effective also when thermally unstable gas such as ozone gas is used for a film formed by extruding a molten thermoplastic resin directly onto the cooling roller 16 without using the support 24.

### [Examples]

Examples of the present invention will be discussed below. The present invention is not limited to these examples.

As shown in Figs. 1 and 2, the gas blower 30 was disposed above the support 24. Four tests were conducted as follows: only the gas blower 30 was disposed (Test 1), the gas blower 30 was covered with the cover 28 and only the cover 28 was heated (Test 2), the gas blower 30 was covered with the cover 28, only the cover 28 was heated, and the gas blower 30 was forcibly cooled (Tests 3 and 4).

### (Test 1)

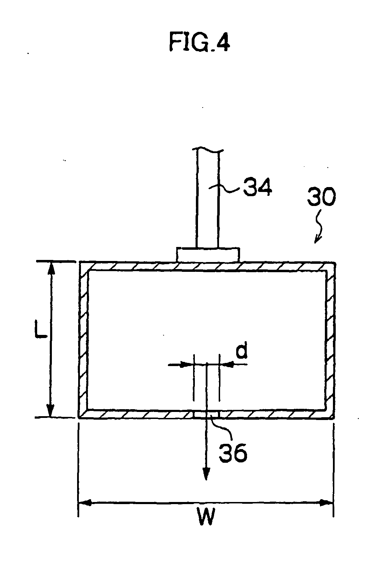

A gas blower 30 of Fig. 4 was used. The gas blower 30 was made of stainless with a thickness (L) of 25 mm and a width (W) of 500 mm and was quadrilateral in cross section. A nozzle outlet 36 having a slit width (d) of 0.5 mm was formed on a blowing surface 30B of the gas blower 30. Then, a resin film 12 was formed by extruding molten polyethylene, in which a plurality of addition agents (a pigment, a dispersant, an antioxidant, and so on) were added, from an extrusion die 14 at 300°C. The resin film 12 was applied to a carried support 24, nipped by a cooling roller 16 and a nip roller 18, cooled by the cooling roller 16, and then is peeled by a peeling roller 20, so that a laminated product 26 having a thickness of 30 µm was manufactured. The line speed was 150 m/minute. Ozone gas was blown from the gas blower 30 to a support 24 on conditions that a gas concentration was 30 g/m³ and the quantity of gas was 25 m³/hour.

### (Test 2) ,

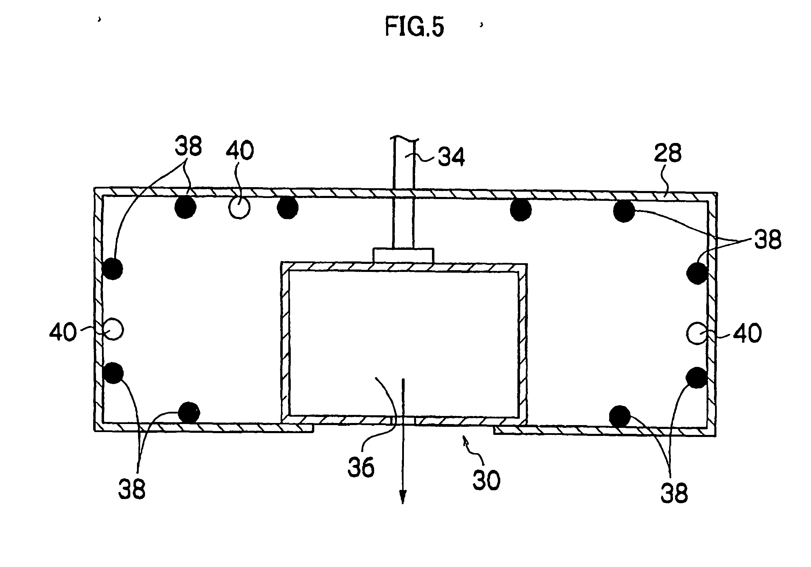

A gas blower 30 comprising a cover 28 and heaters 38 of Fig. 5 was used. The cover 28 having the plurality of heaters 38 and a plurality of temperature sensors 40 of thermocouples was provided outside the same gas blower 30 as Test 1. The cover 28 was heated to 350°C by the heaters 38. The manufacturing conditions of a laminated product 26 and conditions for blowing ozone gas were similar to those of Test 1.

### (Test 3)

A gas blower 30 comprising a cover 28, heaters 38, and a cooling pipe 42 of Fig. 3 was used. The cooling pipe 42 was additionally provided around the sides of the same gas blower 30 as Test 2. Air at room temperature was injected into the cooling pipe 42 with an air quantity of 4 m³/hour to forcibly cool the gas blower 30. The manufacturing conditions of a laminated product 26 and conditions for blowing ozone gas were similar to those of Tests 1 and 2.

### (Test 4)

The same gas blower 30 as Test 3 was used and cool water of 12°C was injected into the cooling pipe 42 with a flow rate of 3 m³/hour to forcibly cool the gas blower 30. The manufacturing conditions of a laminated product 26 and conditions for blowing ozone gas were similar to those of Tests 1 and 2.

### (Test 5)

A space 32 of the gas blower 30 of Test 4 was filled with a foamed ceramic having an insulation effect. Other conditions were similar to those of Test 3.

As a result, in Test 1, an oily liquid (a volatile component volatilized from the resin film) started adhering to the gas blower 30 five minutes after the start of the manufacturing operation of the laminated product. The adherent liquid dropped onto the support 24 ten minutes later. It was necessary to stop the line to perform cleaning, resulting in considerably low productivity.

In Test 2, even if ten hours elapsed from the start of the manufacturing operation of the laminated product, any oily liquid did not adhere to the cover 28 and the gas blower 30. However, since the temperature of the gas blower 30 increased to 250°C and ozone gas rapidly decomposed, adhesion between the support 24 and the resin film 12 considerably decreased. The manufactured laminated product 26 had a low peel strength of 20 g/10 mm and thus the support 24 and the resin film 12 were peeled away from each other.

In Test 3, even if ten hours elapsed from the start of the manufacturing operation of the laminated product, any oily liquid did not adhere to the cover 28 and the gas blower 30. Further, the temperature of the gas blower 30 could be reduced to 100°C. Since it was possible to reduce the decomposition speed of ozone gas, it was possible to sufficiently increase the adhesion of the manufactured laminated product 26 and prevent exfoliation between the support 24 and the resin film 12.

In Test 4, even if ten hours elapsed from the start of the manufacturing operation of the laminated product, any oily liquid did not adhere to the cover 28 and the gas blower 30. Further, the temperature of the gas blower 30 could be further reduced to 60°C. Since it was possible to reduce the decomposition speed of ozone gas as compared with Test 3, it was possible to sufficiently increase the adhesion of the manufactured laminated product 26 and prevent exfoliation between the support 24 and the resin film 12.

In Test 5, even if ten hours elapsed from the start of the manufacturing operation of the laminated product, any oily liquid did not adhere to the cover 28 and the gas blower 30. The temperature of the gas blower 30 could be further reduced to 55°C. Since it was possible to reduce the decomposition speed of ozone gas as compared with Test 4, it was possible to sufficiently increase the adhesion of the manufactured laminated product 26 and prevent exfoliation between the support 24 and the resin film 12.

Another test was conducted in which water cooling with a cooling pipe and air cooling with an air-cooling pipe were concurrently used to forcibly cool the gas blower 30. As a result, the temperature of the gas blower 30 could be reduced to 50°C. When the test concurrently using water cooling and air cooling is compared with Test 5, it is found that the test can have an advantage in its running cost and equipment cost by using a heat insulator with a temperature difference of 5°C. However, when thermally unstable gas such as ozone gas has a long residence time in the gas blower 30, the difference of 5°C is a significant difference for a gas blowing effect. Thus, in this case, it is preferable to combine all of water cooling, air cooling, and the heat insulator.

## Claims

1. A method for manufacturing a film or a laminated product (26), in which when a film made of a resin or the laminated product (26) having a resin film (12) laminated on a support (24) is manufactured, a molten thermoplastic resin is extruded into a film from an extrusion die (14) and thermally unstable gas is blown from a gas blower (30) disposed near the extrusion die (14),
wherely the gas blower (30) is forcibly cooled while the gas blower (30) is covered with a cover (28) and only the cover (28) is heated to a volatilization temperature or higher of a volatile component volatilized from the extruded thermoplastic resin.

2. The method for manufacturing the film or the laminated product (26) according to claim 1, wherein the thermally unstable gas is ozone gas.

3. An apparatus (10) for manufacturing a film or a laminated product (26), in which when a film made of a resin or the laminated product (26) having a resin film (12) laminated on a support (24) is manufactured, a molten thermoplastic resin is extruded into a film from an extrusion die (14) and gas is blown from a gas blower (30) disposed near the extrusion die (14), the apparatus (10) being **characterized in that** it comprises :
a cover (28) for covering the gas blower (30) via a space (32);
a heating device (38) which heats the cover (28); and
a cooling device (42, 44, 46) which cools the gas blower (30).

4. The apparatus (10) for manufacturing the film or the laminated product (26) according to claim 3, wherein the space (32) between the gas blower (30) and the cover (28) is filled with a heat insulator.

## Patentansprüche

1. Verfahren zum Herstellen eines Films oder eines laminierten Produkts (26), bei dem, wenn ein aus einem Harz bestehender Film oder das laminierte Produkt (26) mit einem auf einem Träger (24) auflaminierten Harzfilm (12) gefertigt wird, ein geschmolzenes Thermoplast-Harz aus einer Extrusionsform (14) zu einem Film extrudiert wird und thermisch instabiles Gas aus einem Gasgebläse (30) in der Nähe der Extrusionsform (14) geblasen wird,
wobei das Gasgebläse (30) zwangsweise gekühlt wird, während das Gasgebläse (30) mit einer Abdeckung (28) abgedeckt ist und nur die Abdeckung (24) auf eine Verflüchtigungstemperatur oder eine über dieser liegende Temperatur einer flüchtigen Komponente, die sich aus dem extrudierten Thermoplast-Harz verflüchtigt, erhitzt wird.

2. Verfahren zum Fertigen des Films oder des laminierten Produkts (26) nach Anspruch 1, bei dem das thermisch instabile Gas Ozongas ist.

3. Vorrichtung (10) zum Fertigen eines Films oder eines laminierten Produkts (26), in der, wenn ein Film aus einem Harz oder das laminierte Produkt (26) mit einem auf einem Träger (24) auflaminierten Harzfilm (12) gefertigt wird, ein geschmolzenes Thermoplast-Harz aus einer Extrusionsform (14) zu einem Film extrudiert wird und von einem Gasgebläse (30) in der Nähe der Extrusionsform (14) Gas geblasen wird, wobei die Vorrichtung (10) **dadurch gekennzeichnet ist, dass** sie aufweist:
eine Abdeckung (28) zum Abdecken des Gasgebläses (30) über einen Zwischenraum (32);
eine Heizvorrichtung (38), die die Abdeckung (28) aufheizt; und
eine Kühleinrichtung (42,44, 46), die das Gasgebläse (30) kühlt.

4. Vorrichtung (10) zum Fertigen des Films oder des laminierten Produkts (26) nach Anspruch 3, bei der der Zwischenraum (32) zwischen dem Gasgebläse (30) und der Abdeckung (28) mit einem Wärmeisolator gefüllt ist.

## Revendications

1. Procédé destiné à fabriquer un film ou un produit laminé (26), dans lequel lorsque l'on fabrique un film en résine ou le produit laminé (26) présentant un film en résine (12) laminé sur un support (24), une résine thermoplastique fondue est extrudée en un film à partir d'une filière d'extrusion (14) et un gaz thermiquement instable est soufflé à partir d'une soufflante à gaz (30) disposée à proximité de la filière d'extrusion (14),
la soufflante à gaz (30) étant refroidie de manière forcée tandis que la soufflante à gaz (30) est couverte avec un couvercle (28) et que seul le couvercle (28) est chauffé à une température de volatilisation ou supérieure d'un composant volatile volatilisé à partir de la résine thermoplastique extrudée.

2. Procédé destiné à fabriquer le film ou le produit laminé (26) selon la revendication 1, dans lequel le gaz thermiquement instable est le gaz ozone.

3. Appareil (10) destiné à fabriquer un film ou un produit laminé (26), dans lequel lorsque l'on fabrique un film en résine ou le produit laminé (26) présentant un film en résine (12) laminé sur un support (24), une résine thermoplastique fondue est extrudée en un film à partir d'une filière d'extrusion (14) et un gaz est soufflé à partir d'une soufflante à gaz (30) disposée à proximité de la filière d'extrusion (14), l'appareil étant **caractérisé en ce qu'**il comprend :
un couvercle (28) destiné à couvrir la soufflante à gaz (30) par le biais d'un espace (32) ;
un dispositif de chauffage (38) qui chauffe le couvercle (28), et
un dispositif de refroidissement (42, 44, 46) qui refroidit la soufflante à gaz (30).

4. Appareil (10) destiné à fabriquer un film ou un produit laminé (26) selon la revendication 3, dans lequel l'espace (32) entre la soufflante à gaz (30) et le couvercle (28) est rempli avec un isolant thermique.
